# FASCICULE DE BREVET EUROPEEN

(11) **EP 1 278 789 B1**
(45) Date de publication et mention de la délivrance du brevet: **17.08.2005**
(21) Numéro de dépôt: 01936266.4
(22) Date de dépôt: 23.04.2001
(51) Int. Cl.: C08F 297/02, C08L 53/00, B60C 1/00

(54) **COPOLYMERES A BLOCS POUR DES COMPOSITIONS DE CAOUTCHOUC UTILISABLES POUR DES PNEUMATIQUES**
BLOCKCOPOLYMERE FÜR KAUTSCHUKZUSAMMENSETZUNGEN VERWENDBAR FÜR REIFEN
BLOCK COPOLYMERS FOR RUBBER COMPOSITIONS FOR USE IN TYRES

(30) Priorité: 25.04.2000 FR 0005345
(43) Date de publication de la demande: 29.01.2003
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: ROBERT, Pierre, F-63170 Perignat-Les-Sarlieve (FR); FAVROT, Jean-Michel, F-63800 Cournon-d'Auvergne (FR); CABIOCH, Jean-Luc, F-63119 Chateaugay (FR); VOULLEMIER, Bernard, F-63170 Aubiere (FR)
(74) Mandataire: Hiebel, Robert
(86) Numéro de dépôt international: PCT/EP2001/004572
(87) Numéro de publication internationale: WO 2001/081439

(56) Documents cités:
- EP-A- 0 438 967
- EP-A- 0 441 485
- US-A- 6 043 321

## Description

La présente invention concerne des copolymères à blocs destinés à former une matrice élastomère d'une composition de caoutchouc réticulable d'hystérèse réduite, une telle composition de caoutchouc qui est utilisable à l'état réticulé dans une bande de roulement de pneumatique, une telle bande de roulement et un pneumatique l'incorporant qui présente une résistance au roulement réduite.

La réduction de l'hystérèse des mélanges est un objectif permanent de l'industrie du pneumatique afin de limiter la consommation d'essence et de préserver ainsi l'environnement.

Cette réduction d'hystérèse doit se faire en conservant intacte, voire en améliorant l'aptitude à la mise en oeuvre des mélanges. Pour atteindre l'objectif de baisse d'hystérèse, de nombreuses solutions ont déjà été expérimentées. En particulier, la fonctionnalisation en bout de chaîne est apparue comme une voie intéressante.

La plupart des voies proposées a consisté en la recherche de fonctions adjointes en fin de polymérisation et susceptibles d'interaction avec le noir de carbone, par exemple incluses dans des polymères étoilés ou couplés à l'étain. A titre d'exemple, on peut citer le document de brevet européen EP-A-709 235. D'autres fonctions interagissant avec le noir de carbone ont également été adjointes en bout de chaîne, comme la 4,4'-bis-(diéthylaminobenzophénone), encore appelée DEAB, ou d'autres fonctions aminées. A titre d'exemple, on peut citer les documents de brevet FR-A-2 526 030 et US-A- 4 848 511.

Depuis quelques années, l'utilisation de la silice a été rendue possible et la recherche de fonctions interactives avec cette charge s'est développée. On peut citer notamment à ce titre le document de brevet FR-A-2 740 778, qui divulgue par exemple des fonctions comprenant un groupe silanol. On peut également citer le document US-A-5 066 721, qui divulgue des fonctions alkoxysilane ou aryloxysilane, ou encore le document US-A-3 244 664.

La plupart de ces solutions, tant pour le noir que pour la silice, conduit réellement à une limitation de l'hystérèse et à un gain en renforcement des compositions correspondantes. Malheureusement, il est tout aussi général que ces améliorations conduisent à une plus grande difficulté de mise en oeuvre de ces compositions.

On a donc recherché d'autres moyens de diminution de l'hystérèse qui n'affectent pas la mise en oeuvre des mélanges.

En particulier, l'utilisation de polymères à faible potentiel hystérétique, en particulier le polyisoprène, est apparue prometteuse. Cependant, l'utilisation directe de ce type de polymère n'offre pas toujours un compromis module dynamique / hystérèse satisfaisant.

Pour pallier cet inconvénient, on a cherché à utiliser des copolymères à blocs comprenant un bloc polyisoprène.

Les copolymères à blocs sont généralement constitués de matériaux à phases ségrégées. On peut par exemple citer les copolymères diblocs polyisoprène - polystyrène, dont la synthèse est largement décrite dans la littérature. Ces copolymères diblocs sont connus pour présenter des propriétés intéressantes de résistance aux impacts.

Les copolymères à blocs comprenant des blocs polyisoprène et polybutadiène (IR et BR en abrégé, respectivement) sont également décrits dans la littérature.

Certaines réactions de post-polymérisation transforment ces élastomères en matériaux thermoplastiques. Par exemple, lors de l'hydrogénation d'un copolymère tribloc BR-IR-BR, la fraction butadiénique forme un polyéthylène cristallin, alors que la fraction isoprénique conduit à un matériau caoutchoutique de type éthylène/ butylène.

L'hydrochloration de ces matériaux peut également leur conférer un caractère cristallin.

Des copolymères diblocs IR-SBR (polyisoprène - copolymère de styrène et de butadiène) ont été décrits dans le document de brevet européen EP-A-438 967, en relation avec une charge renforçante constituée spécifiquement de noir de carbone. La masse moléculaire du bloc IR est préférentiellement comprise entre 70 000 et 150 000 g/mol, et celle du bloc SBR est de préférence comprise entre 220 000 et 240 000 g/mol. De plus, le rapport de la masse moléculaire du bloc IR sur celle du bloc SBR doit être supérieur à 33 % et peut aller jusqu'à 300 %.

Les compositions de caoutchouc décrites dans ce document peuvent présenter une structure variable, laquelle est de type lamellaire lorsque ledit rapport est voisin de 33 %, et de type à sphères lorsque ledit rapport est voisin de 300 %.

Cependant, pour toutes ces valeurs dudit rapport allant de 33 % à 300 %, il est à noter que la masse moléculaire relativement élevée du bloc IR conduit toujours à une ségrégation marquée des phases correspondant respectivement aux blocs IR et SBR, en raison des taux élevés d'enchaînements 1, 4 pour le bloc IR.

Les copolymères à blocs IR-BR ont aussi été envisagés en tant qu'agents compatibilisants des coupages de polyisoprène et de polybutadiène.

On peut citer à ce titre l'article de D. J. Zanzig, F. L. Magnus, W. L. Hsu, A. F. Halasa, M. E. Testa, Rubber Chemistry and Technology vol. 66, pp. 538-549 (1993), qui mentionne l'utilisation de copolymères à blocs IR-BR avec 80 % ou 50 % d'IR. A ces taux relatifs, la masse moléculaire du bloc IR est toujours égale ou supérieure à 200 000 g/mole, et il en résulte que les blocs de ces copolymères forment également des phases ségrégées.

On peut également citer à ce titre l'article de R. E. Cohen, A. R. Ramos, Macromolecules Vol. 12, n°1, 131-134 (1979). Dans cet article, les copolymères diblocs utilisés présentent des blocs IR de masse moléculaire égale à 104 000 g/mol, ou égale à 133 000 g/mol. La masse relativement élevée des blocs IR et des blocs BR conduit également à une forte ségrégation des phases relatives à ces deux blocs.

La demanderesse vient de découvrir de façon surprenante qu'un copolymère à n blocs (n = 2 ou 3) destiné à former une matrice élastomère d'une composition de caoutchouc réticulable d'hystérèse réduite, chacun desdits blocs comprenant un élastomère diénique « essentiellement insaturé » (i.e. dont le taux molaire d'unités issues de diènes conjugués est supérieur à 15 %), et l'un ou chacun desdits blocs formant extrémité de chaîne dudit copolymère étant constitué d'un polyisoprèné, respectivement pour n = 2 ou n = 3,
qui est tel que
- la masse moléculaire moyenne en nombre Mₙ₁ dudit ou de chaque bloc polyisoprène d'extrémité est comprise entre 2 500 et 20 000 g/mol, et en ce que
- la masse moléculaire moyenne en nombre Mₙ₂ du bloc dudit copolymère qui est autre que ledit ou chaque bloc polyisoprène d'extrémité est comprise entre 80 000 g/mol et 350 000 g/mol,
permet d'optimiser d'une manière significative les résultats de réduction d'hystérèse et d'aptitude à la mise en oeuvre pour ladite composition de caoutchouc.

A titre d'élastomère diénique « essentiellement insaturé » susceptible d'être mis en oeuvre pour obtenir ledit bloc autre que le bloc IR, lui-même répondant à cette définition, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone.

A titre de diènes conjugués conviennent notamment, le 1, 3-butadiène, les 2, 3-di (alcoyle en C1 à C5) 1, 3-butadiène tels que par exemple le 2, 3 diméthyl-1, 3-butadiène, le 2, 3-diéthyl-1, 3-butadiène, le 2-méthyl 3-éthyl 1, 3-butadiène, le 2-méthyl 3-isopropyl 1, 3-butadiène, le phényl 1, 3-butadiène, le 1, 3-pentadiène, le 2, 4-hexadiène.

A titre de composés vinylaromatiques conviennent notamment le styrène, l'ortho-, para-, ou meta-méthylstyrène, le mélange commercial "vinyl toluène", le para-tertiobutylstyrène, les méthoxystyrènes, le vinylmésitylène.

En particulier, en prenant comme référence les hystérèses relatives à des élastomères diéniques « essentiellement insaturés », tels que des élastomères « témoin » BR ou SBR, un tel copolymère à blocs selon l'invention est caractérisé par une hystérèse qui est plus réduite que celle qui est relative aux coupages correspondants de polyisoprène, par exemple d'IR et de BR, ou d'IR et de SBR.

On notera que cette masse réduite dudit ou chaque bloc polyisoprène d'extrémité permet de ne pas abaisser trop significativement le module du copolymère à blocs obtenu.

D'autre part, on notera que l'invention peut permettre d'obtenir des phases non ségrégées pour le ou chaque bloc d'extrémité IR et l'autre bloc. En d'autres termes, on notera que la ségrégation des phases n'est pas une condition nécessaire à l'obtention des avantages précités de l'invention qui sont procurés par le ou chaque bloc d'extrémité IR.

De préférence, le rapport desdites masses moléculaires Mₙ₁ / Mₙ₂ est compris entre 5 et 20 %.

Egalement à titre préférentiel, ledit bloc qui est autre que ledit ou chaque bloc polyisoprène d'extrémité comprend une fonction interactive avec une charge renforçante.

On notera que la réduction d'hystérèse est encore accrue dans ce cas, et qu'elle s'accompagne d'une amélioration de l'aptitude à la mise en oeuvre, par rapport à des élastomères fonctionnalisés classiques.

Ladite fonction peut être interactive avec de la silice, et elle peut par exemple comprendre un groupe silanol ou un groupe mono, di ou tri-aikoxysilane.

Ladite fonction peut également être interactive avec du noir de carbone, et elle peut par exemple comprendre une liaison C-Sn.

Dans ce cas, cette fonction peut être obtenue comme connu en soi par réaction avec un agent de fonctionnalisation de type organohalogénoétain pouvant répondre la formule générale R₃SnCl, ou avec un agent de couplage de type organodihalogénoétain pouvant répondre à la formule générale R₂SnCl₂, ou avec un agent d'étoilage de type organotrihalogénoétain pouvant répondre à la formule générale RSnCl₃, ou de type tétrahalogénoétain pouvant répondre à la formule SnCl₄ (où R est un radical alkyle, cycloalkyle ou aryle).

Ladite fonction interactive avec du noir de carbone peut également comprendre un groupe amine.

A titre préférentiel, ledit bloc qui est autre que ledit ou chaque bloc polyisoprène d'extrémité peut être un polybutadiène, un copolymère du styrène et du butadiène, un copolymère du styrène et de l'isoprène ou un terpolymère de styrène/ butadiène/ isoprène.

Selon une autre caractéristique de l'invention, ledit ou chaque bloc polyisoprène d'extrémité présente un taux d'enchaînements vinyliques 3,4 et 1,2 qui est compris entre 1 et 20 %.

Par ailleurs, le taux d'enchaînements 1,2 dans ledit bloc qui est autre que ledit ou chaque bloc polyisoprène d'extrémité, lorsqu'il s'agit d'un bloc polybutadiène, est compris entre 10 % et 60 %.

Selon une autre caractéristique de l'invention, les taux respectifs d'enchaînements 1,2 et d'enchaînements styréniques dans ledit bloc qui est autre que ledit ou chaque bloc polyisoprène d'extrémité, lorsqu'il s'agit d'un bloc copolymère de styrène et de butadiène, sont compris entre 10 % et 70 %, et entre 5 % et 50 %.

Une composition de caoutchouc réticulable selon l'invention, qui est adaptée pour présenter une aptitude à la mise en oeuvre améliorée à l'état non réticulé et une hystérèse réduite à l'état réticulé, est telle que sa matrice élastomère comprend un copolymère à blocs selon l'invention tel que défini ci-dessus.

Selon une autre caractéristique de l'invention, cette composition peut comprendre une charge renforçante, ledit bloc qui est autre que ledit ou chaque bloc polyisoprène d'extrémité étant fonctionnalisé, couplé ou étoilé pour la liaison avec ladite charge renforçante.

Ladite charge renforçante comprend par exemple une charge inorganique renforçante à titre majoritaire (c'est-à-dire selon une fraction massique supérieure à 50 %).

Dans la présente demande, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Préférentiellement, la charge inorganique renforçante est, en totalité ou tout du moins majoritairement, de la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, même si les silices précipitées hautement dispersibles sont préférées.

Dans le présent exposé, la surface spécifique BET est déterminée de manière connue, selon la méthode de Brunauer-Emmett-Teller décrite dans "The Journal of the American Chemical Society" Vol. 60, page 309, février 1938 et correspondant à la norme AFNOR-NFT-45007 (novembre 1987); la surface spécifique CTAB est la surface externe déterminée selon la même norme AFNOR-NFT-45007 de novembre 1987.

Par silice hautement dispersible, on entend toute silice ayant une aptitude très importante à la désagglomération et à la dispersion dans une matrice élastomère, observable de manière connue par microscopie électronique ou optique, sur coupes fines. Comme exemples non limitatifs de telles silices hautement dispersibles préférentielles, on peut citer la silice Perkasil KS 430 de la société Akzo, la silice BV 3380 de la société Degussa, les silices Zeosil 1165 MP et 1115 MP de la société Rhodia, la silice Hi-Sil 2000 de la société PPG, les silices Zeopol 8741 ou 8745 de la Société Huber, des silices précipitées traitées telles que par exemple les silices "dopées" à l'aluminium décrites dans le document de brevet EP-A-735088.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

On notera que la charge renforçante d'une composition de caoutchouc selon l'invention peut contenir en coupage (mélange), en plus de la ou des charges inorganiques renforçantes précitées, du noir de carbone à titre minoritaire (c'est-à-dire selon une fraction massique inférieure à 50 %). Comme noirs de carbone conviennent tous les noirs de carbone, notamment les noirs du type HAF, ISAF, SAF, conventionnellement utilisés dans les pneumatiques et particulièrement dans les bandes de roulement des pneumatiques. A titre d'exemples non limitatifs de tels noirs, on peut citer les noirs N115, N134, N234, N339, N347, N375.

Par exemple, les coupages noir/ silice ou les noirs partiellement ou intégralement recouverts de silice conviennent pour constituer la charge renforçante.

Conviennent également à titre de charge inorganique renforçante les noirs de carbone modifiés par de la silice tels que, à titre non limitatif, les charges qui sont commercialisées par la société CABOT sous la dénomination « CRX 2000 », et qui sont décrites dans le document de brevet international WO-A-96/37547.

Selon un autre exemple de réalisation de la composition de l'invention, ladite charge renforçante comprend, à titre majoritaire, du noir de carbone.

A titre de noir de carbone, conviennent tous les noirs précités qui sont commercialement disponibles ou conventionnellement utilisés dans les pneumatiques et particulièrement dans les bandes de roulement, ainsi que les coupages noir/silice, les noirs de carbone partiellement ou intégralement recouverts de silice, ou lesdits noirs de carbone modifiés par de la silice.

Selon une variante de réalisation de l'invention, ladite charge renforçante comprend un coupage de 50 % de charge inorganique renforçante et de 50 % noir de carbone.

Il est bien connu de l'homme du métier qu'il est nécessaire d'utiliser, pour une charge inorganique renforçante telle que par exemple une silice ou une alumine renforçante, un agent de couplage (charge inorganique/ élastomère), encore appelé agent de liaison, qui a pour fonction d'assurer la liaison ou "couplage" entre la charge inorganique et l'élastomère, tout en facilitant la dispersion de cette charge inorganique au sein de la matrice élastomère.

Par agent de couplage, on entend plus précisément un agent apte à établir une connexion suffisante, de nature chimique et/ou physique, entre la charge considérée et l'élastomère, tout en facilitant la dispersion de cette charge au sein de la matrice élastomère; un tel agent de couplage, au moins bifonctionnel, a par exemple comme formule générale simplifiée " Y-T-X ", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère, par exemple par l'intermédiaire d'un atome de soufre;
- T représente un groupe permettant de relier Y et X.

Les agents de couplage ne doivent en particulier pas être confondus avec de simples agents de recouvrement de la charge considérée qui, de manière connue, peuvent comporter la fonction Y active vis-à-vis de la charge mais sont dépourvus de la fonction X active vis-à-vis de l'élastomère.

De tels agents de couplage, d'efficacité variable, ont été décrits dans un très grand nombre de documents et sont bien connus de l'homme du métier. On peut utiliser en fait tout agent de couplage connu pour, ou susceptible d'assurer efficacement, dans les compositions de caoutchouc diénique utilisables pour la fabrication de pneumatiques, la liaison ou couplage entre une charge blanche renforçante telle que de la silice et un élastomère diénique, comme par exemple des organosilanes, notamment des alkoxysilanes polysulfurés ou des mercaptosilanes, ou encore des polyorganosiloxanes porteurs des fonctions X et Y précitées.

Des agents de couplage silice/élastomère, notamment, ont été décrits dans un grand nombre de documents, les plus connus étant des alkoxysilanes bifonctionnels tels que des alkoxysilanes polysulfurés.

On utilise en particulier des alkoxysilanes polysulfurés, dits "symétriques" ou "asymétriques" selon leur structure particulière, tels que décrits par exemple dans les brevets US-A-3 842 111, US-A-3 873 489, US-A-3 978 103, US-A-3 997 581, US-A-4 002 594, US-A-4 072 701, US-A-4 129 585, ou dans les brevets plus récents US-A-5 580 919, US-A-5 583 245, US-A-5 650 457, US-A-5 663 358, US-A-5 663 395, US-A-5 663 396, US-A-5 674 932, US-A-5 675 014, US-A-5 684 171, US-A-5 684 172, US-A-5 696 197, US-A-5 708 053, US-A-5 892 085, EP-A-1 043 357 qui énoncent en détail de tels composés connus.

Conviennent en particulier pour la mise en oeuvre de l'invention, sans que la définition ci-après soit limitative, des alkoxysilanes polysulfurés symétriques répondant à la formule générale (I) suivante:

(I) Z - A - Sₙ - A - Z ,

dans laquelle:
- n est un entier de 2 à 8 (de préférence de 2 à 5);
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄ en particulier le propylène);
- Z répond à l'une des formules ci-après: 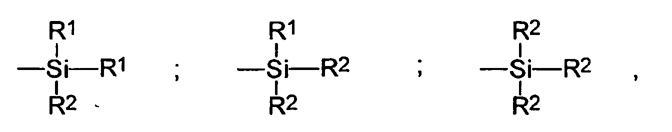
dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence des groupes alkoxyle en C₁-C₈ ou cycloalkoxyle en C₅-C₈, plus préférentiellement des groupes alkoxyle en C₁-C₄, en particulier le méthoxyle et/ou l'éthoxyle).

Dans le cas d'un mélange d'alkoxysilanes polysulfurés répondant à la formule (I) ci-dessus, notamment des mélanges usuels disponibles commercialement, on comprendra que la valeur moyenne des "n" est un nombre fractionnaire, de préférence compris dans un domaine de 2 à 5.

Comme alkoxysilanes polysulfurés, on citera plus particulièrement les polysulfures (notamment les disulfures, trisulfures ou tétrasulfures) de bis-(alkoxyl(C₁-C₄)-alkyl(C₁-C₄)silylalkyl(C₁-C₄)), comme par exemple les polysulfures de bis(3-triméthoxysilylpropyl) ou de bis(3-triéthoxysilylpropyl). Parmi ces composés, on utilise notamment le tétrasulfure de bis(3-triéthoxysilylpropyl), en abrégé TESPT, de formule [(C₂H₅O)₃Si(CH₂)₃S₂]₂ ou le disulfure de bis(triéthoxysilylpropyle), en abrégé TESPD, de formule [(C₂H₅O)₃Si(CH₂)₃S]₂. Le TESPD est commercialisé par exemple par la société Degussa sous les dénominations Si266 ou Si75 (dans le second cas, sous forme d'un mélange de disulfure (à 75% en poids) et de polysulfures), ou encore par la société Witco sous la dénomination Silquest A1589. Le TESPT est commercialisé par exemple par la société Degussa sous la dénomination Si69 (ou X50S lorsqu'il est supporté à 50% en poids sur du noir de carbone), ou encore par la société Osi Specialties sous la dénomination Silquest A1289 (dans les deux cas, mélange commercial de polysulfures avec une valeur moyenne pour n qui est proche de 4).

L'homme du métier saura ajuster la teneur en agent de couplage dans les compositions de l'invention, en fonction de l'application visée, de la nature de l'élastomère utilisé et de la quantité de carbure dé silicium renforçant, complété le cas échéant de toute autre charge inorganique employée à titre de charge renforçante complémentaire.

Les compositions conformes à l'invention contiennent, outre ladite matrice élastomère, ladite charge renforçante et éventuellement un ou des agents de liaison charge inorganique renforçante/ élastomère, tout ou partie des autres constituants et additifs habituellement utilisés dans les mélanges de caoutchouc, comme des plastifiants, pigments, antioxydants, cires anti-ozonantes, un système de réticulation à base soit de soufre et/ou peroxyde et/ou de bismaléimides, des accélérateurs de réticulation, des huiles d'extension, un ou des agents de recouvrement de la charge inorganique renforçante, tels que des alcoxysilanes, polyols, amines, etc...

Une bande de roulement pour pneumatique selon l'invention, qui est utilisable pour réduire la résistance au roulement d'un pneumatique l'incorporant, est telle qu'elle comprend une composition de caoutchouc réticulée telle que définie ci-dessus.

Un pneumatique selon l'invention est tel qu'il comporte une telle bande de roulement.

Les caractéristiques précitées de la présente invention, ainsi que d'autres, seront mieux comprises à la lecture de la description suivante de plusieurs exemples de réalisation de l'invention, donnés à titre illustratif et non limitatif, en comparaison d'un dernier exemple illustrant un état antérieur de la technique.

Dans les exemples, les propriétés des compositions de l'invention sont évaluées comme suit:
- viscosité Mooney ML (1+4) à 100° C: mesurée selon la norme ASTM:D-1646, en abrégé ML ci-après;
- modules d'allongement à 300 % (MA 300), à 100 % (MA 100) et à 10 % (MA 10): mesures effectuées selon la norme ISO 37;
- indices de cassage Scott: mesurés à 20° C;
- force de rupture (FR): mesurée en MPa;
- allongement à la rupture (AR) en %;
- pertes hystérétiques (PH): mesurées par rebond à 60° C en %, la déformation pour les pertes mesurées étant de 40%;
- dureté SHORE A: mesures effectuées selon la norme DIN 53505;
- propriétés dynamiques en cisaillement (E' et delta E', G* et delta G*):
   mesures en fonction de la déformation, effectuées à 10 Hertz avec une déformation crête-crête allant de 0,15 % à 50 % pour E', et allant de 0,45 % à 50 % pour G*.

La non-linéarité exprimée est la différence de module de cisaillement entre 0,15 % et 50 % de déformation, en MPa.

L'hystérèse est exprimée par la mesure de tan delta, à 7 % de déformation et à 23 % selon la norme ASTM D2231-71 (réapprouvée en 1977);
- spécificité des descripteurs en non-chargé:
   pour l'exemple 3 ci-après, concernant les matériaux non chargés, le descripteur de l'hystérèse est la valeur de tan delta qui est mesurée en compression sinusoïdale à 10 Hz et à des températures de 0° C, 20° C et 50° C.

### EXEMPLE 1:

### Copolymère A non fonctionnalisé à trois blocs IR-BR-IR selon l'invention et Compositions de caoutchouc selon l'invention comprenant ce copolymère A.

### 1) Préparation du copolymère A à trois blocs selon l'invention et de deux homopolymères "témoin":

### 1.1) Préparation du copolymère A selon l'invention:

Dans un réacteur de 10 litres contenant 5 000 g de toluène désaéré, on ajoute 500 g de butadiène ainsi que 0,01 mol de 1,1'-4,4'-tétraphényldilithiobutane, initiateur difonctionnel connu de l'homme de l'art. La polymérisation est conduite à 70° C, et le taux de monomère converti est de 100 % au bout d'une heure. Ce taux est déterminé par pesée d'un extrait séché à 110° C, sous la pression réduite de 300 mm Hg.

La masse moléculaire du polybutadiène dilithié qui est obtenu, laquelle est déterminée par osmométrie sur un prélèvement stoppé à l'aide de deux équivalents lithium de méthanol, est de 95 000 g/mol.

La technique d'osmométrie est mise en oeuvre dans ces exemples au moyen d'un osmomètre qui est commercialisé sous la dénomination « Gonotec » et dont le modèle est « Osmomat 020 ».

La viscosité inhérente de ce prélèvement est de 1.42 dl/g, et le pourcentage de motifs vinyliques, déterminé par la technique de proche infra-rouge, est de 16 %.

On ajoute à ce polybutadiène dilithié 50 g d'isoprène (isoprène purifié par distillation, passage sur alumine basique, puis entraînement azéotropique de l'eau par barbotage à l'azote).

Le taux d'isoprène converti, après 80 min. à une température de 40° C, est de 100 %.

On obtient ainsi un copolymère à trois blocs IR-BR-IR, que l'on soumet à un traitement anti-oxydant par addition de 0,4 partie pour cent parties d'élastomère (pce) de 4,4'-méthylène-bis-2,6-tert-butylphénol. On récupère ce copolymère par l'opération classique de stripping à la vapeur d'eau, puis on le sèche sur un outil à cylindres à 100° C et pendant 20 min.

La viscosité inhérente de ce copolymère A est de 1,50 dl/g, et le pourcentage de motifs vinyliques de la partie isoprénique, déterminé par la technique de RMN du proton, est de 8 %.

Compte tenu de cette masse moléculaire, déteminée par osmométrie, et de ce dosage RMN, on en déduit que la masse moléculaire de chaque bloc IR est de 10 000 g/mol, ce qui est en accord avec les quantités d'isoprène injecté et d'initiateur actif.

### 1. 2) Préparation d'un homopolymère témoin B constitué de polybutadiène:

Ce polybutadiène B est préparé dans des conditions identiques à celles décrites pour la préparation du polybutadiène du paragraphe 1. 1), à ceci près que l'initiateur utilisé pour ce polybutadiène B n'est pas dilithié.

Cet initiateur est le n-butyl lithium (n-BuLi dans la suite de la présente description), et on l'introduit dans le milieu réactionnel à hauteur de 0,01 mol. On soumet le polybutadiène obtenu à l'issue de la réaction de polymérisation à un traitement anti-oxydant, par addition de 0,4 pce de 4,4'-méthylène-bis-2,6-tert-butylphénol.

La masse moléculaire du polybutadiène B ainsi obtenu, laquelle est déterminée par osmométrie, est de 120 000 g/mol.

La viscosité inhérente de ce polybutadiène B est de 1,38 dl/g, et le pourcentage de motifs vinyliques de la partie isoprénique, déterminé par la technique de proche infra-rouge, est de 16 %.

### 1. 3) Préparation d'un homopolymère témoin C constitué de polyisoprène:

Ce polyisoprène C est préparé dans des conditions identiques à celles décrites au paragraphe 1. 2) pour la synthèse du polybutadiène B, le butadiène étant remplacé par l'isoprène.

On soumet le polyisoprène obtenu à l'issue de la réaction de polymérisation à un traitement anti-oxydant, par addition de 4,4'-méthylène-bis-2,6-tert-butylphénol.

On récupère ce polyisoprène par stripping à la vapeur d'eau, puis on le sèche sur un outil à cylindres à une température de 100° C et pendant 20 min.

La masse moléculaire du polyisoprène C ainsi obtenu, laquelle est déterminée par osmométrie, est de 110 000 g/mol.

La viscosité inhérente de ce polyisoprène C est de 1,29 dl/g, et le pourcentage d'enchaînements 3,4 de la partie isoprénique est de 8 %.

### 2) Compositions de caoutchouc selon l'invention comprenant chacune le copolymère A, en comparaison de compositions "témoin" à base desdits homopolymères témoin B et C:

### 2. 1) Compositions de caoutchouc dépourvues de charge renforçante:

On a ici testé:
une composition A selon l'invention à base du copolymère A à blocs selon l'invention,
une composition B "témoin" à base dudit polybutadiène B, et
une composition C "témoin" à base d'un coupage dudit polybutadiène B et dudit polyisoprène C, le taux de polyisoprène dans le coupage étant équivalent au taux de polyisoprène dans ledit copolymère A.

On a utilisé la formulation suivante (en pce) pour chacune de ces trois compositions A, B et C:

| | |
|---|---|
| matrice élastomère | 100 |
| ZnO | 2,5 |
| acide stéarique | 1,5 |
| soufre | 1,2 |
| sulfénamide (1) | 1,2 |

où (1) représente la N-cyclohexyl-2-benzothiazylsulfénamide.

Chaque composition est préparée dans un mélangeur interne, par travail thermomécanique en une étape qui dure 5 min., pour une vitesse de palettes de 40 tr/min., jusqu'à atteindre une même température de tombée égale à 90° C, tandis que l'incorporation du système vulcanisant est effectuée sur "homo-finisseur" à 30° C. La vulcanisation est effectuée à 150° C pendant 75 min.

Les résultats sont consignés dans le tableau 1 et sur la Fig. 1 ci-après:

**TABLEAU 1:**

| Compositions | Composition A | Composition B | Composition C |
|---|---|---|---|
| tan delta: | | | |
| à 0° C | 0,0562 | 0,075 | 0,0768 |
| à 20° C | 0,0517 | 0,067 | 0,0718 |
| à 50° C | 0,0409 | 0,0584 | 0,0604 |

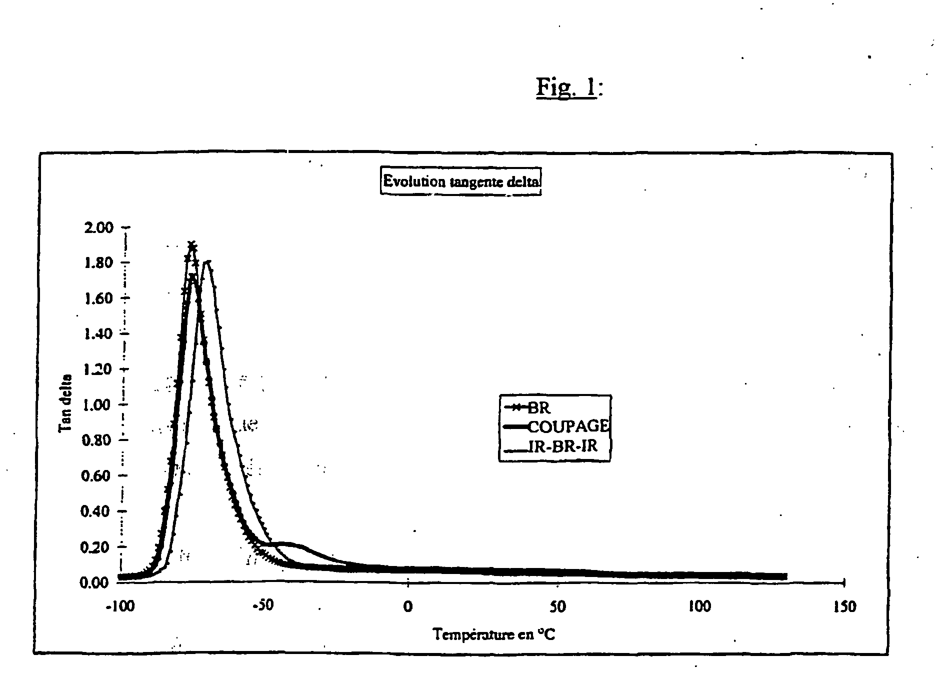

On peut déduire de ces résultats que, dans le domaine concerné par les mesures de résistance au roulement de pneumatiques, c'est-à-dire pour des températures de tan delta allant de 0° C à 50° C, le niveau de dissipation obtenu avec la composition A selon l'invention, à base du copolymère A à trois blocs IR-BR-IR, est toujours inférieur à celui obtenu avec les compositions B ou C, respectivement à base du polybutadiène B et du coupage du polybutadiène B et du polyisoprène C.

Comme cela apparaît à la Fig. 1, on notera que le copolymère A de ladite composition A présente des phases non ségrégées pour les trois blocs qu'il comporte, alors que le coupage des homopolymères B et C conduit à des phases ségrégées (la présence d'un second massif sur le graphe de dissipation relatif au coupage permet de conclure à la ségrégation de phases).

### 2. 2) Compositions de caoutchouc pour bandes de roulement de pneumatique comprenant une charge renforçante:

On a ici testé trois compositions A', B' et C', qui se différencient desdites compositions A, B et C du paragraphe 2. 1) en ce qu'elles comprennent chacune une charge renforçante qui est constituée de noir de carbone N375. Plus précisément, chaque composition A', B', C' testée comprend une quantité de charge renforçante qui est,
- soit égale à 40 pce (les compositions correspondantes sont identifiées ci-après par les références A'₁, B'₁ et C'₁),
- soit égale à 60 pce (les compositions correspondantes sont identifiées ci-après par les références A'₂, B'₂ et C'₂).

On a par conséquent utilisé la formulation suivante (en pce) pour chacune de ces trois compositions A', B' et C':

| | |
|---|---|
| matrice élastomère | 100 |
| N375 | 40 ou 60 |
| ZnO | 2,5 |
| acide stéarique | 1,5 |
| soufre | 1,2 |
| sulfénamide (1) | 1,2 |

où (1) représente la N-cyclohexyl-2-benzothiazylsulfénamide.

Chaque composition est préparée dans un mélangeur interne, par travail thermomécanique en une étape qui dure 5 min., pour une vitesse de palettes de 40 tr/min., jusqu'à atteindre une même température de tombée égale à 160° C, tandis que l'incorporation du système vulcanisant est effectuée sur "homo-finisseur" à 30° C. La vulcanisation est effectuée à 150° C pendant 30 min.

Les résultats sont consignés dans le tableau 2 suivant:

**TABLEAU 2:**

| Compositions | A'₁ | B'₁ | C'₁ | A'₂ | B'₂ | C'₂ |
|---|---|---|---|---|---|---|
| E' à 0,2 % (MPa) | 11,56 | 11,77 | 11,71 | 18,51 | 17,67 | 17,6 |
| E' à 7 % (MPa) | 6,83 | 6,44 | 6,3 | 10,14 | 9,65 | 8,99 |
| delta E' (MPa) | 4,73 | 5,33 | 5,41 | 8,37 | 8,02 | 8,61 |
| tan delta max. | 0,177 | 0,214 | 0,209 | 0,22 | 0,255 | 0,258 |

| Propriétés dynamiques en fonction de la température | | | | | | |
|---|---|---|---|---|---|---|
| tan delta | | | | | | |
| à 0° C | 0,156 | 0,173 | 0,182 | 0,169 | 0,179 | 0,182 |
| à 20° C | 0,153 | 0,170 | 0,175 | 0,172 | 0,186 | 0,188 |
| à 50° C | 0,144 | 0,163 | 0,165 | 0,169 | 0,185 | 0,188 |

Concernant les propriétés à l'état vulcanisé, on notera que pour ces compositions chargées au noir de carbone et indépendamment du taux de charge, les propriétés hystérétiques à faibles déformations des compositions A'₁ et A'₂ selon l'invention, à base du copolymère A à trois blocs IR-BR-IR, sont fortement améliorées par rapport à celles des autres compositions qui sont à base du polybutadiène B ou du coupage du polybutadiène B et du polyisoprène C.

On en déduit que la résistance au roulement de pneumatiques dont la bande de roulement comprend lesdites compositions A'₁ et A'₂ selon l'invention est améliorée par rapport à celle de pneumatiques dont les bandes de roulement comprennent respectivement ces compositions « témoin ».

### EXEMPLE 2:

### Copolymères fonctionnalisés à deux blocs SBR-IR selon l'invention et Compositions de caoutchouc selon l'invention comprenant ces copolymères.

### 1) Préparation d'un copolymère fonctionnalisé D à deux blocs SBR-IR selon l'invention et d'un copolymère SBR "témoin" fonctionnalisé E, ces copolymères présentant un ML de 90:

### 1. 1) Préparation du copolymère D à blocs selon l'invention:

### 1. 1. 1) Préparation d'un polyisoprène vivant:

Le polyisoprène est préparé en continu dans un réacteur de 14 l de capacité, qui est muni d'un agitateur de type turbine. On introduit en continu dans ce réacteur, d'une part, du cyclohexane et de l'isoprène selon les rapports massiques respectifs de 100 / 14,5 et, d'autre part, une solution de 10 000 µmol de sec-butyllithium actif (s-BuLi) pour 100 g d'isoprène.

On ajuste les débits des différentes solutions, de telle sorte que le temps de séjour moyen soit de 40 min. La température du réacteur est maintenue à 60° C. En sortie du réacteur, la conversion en monomères est de 100 %.

Le taux de butyllithium résiduel est déterminé sur un prélèvement, par l'intermédiaire d'un adduit qui est obtenu au moyen de la benzophénone et que l'on dose par la technique de chromatographie en phase gazeuse au moyen d'un chromatographe de dénomination « HP 5890 », sur une colonne de dénomination « CPSil 19 (avec un temps de rétention de 8 minutes et 20 secondes). Ce taux de BuLi résiduel est ainsi estimé à 5 %.

La masse moléculaire en nombre du polyisoprène vivant ainsi obtenu, laquelle est déterminée par tonométrie sur un prélèvement stoppé par un équivalent lithium de méthanol, est de 9 800 g/mol. Cette technique de tonométrie est mise en oeuvre au moyen d'un osmomètre commercialisé sous la dénomination « Gonotec » et de modèle « Osmomat 090 ».

La température de transition vitreuse Tg de ce polyisoprène est de -64° C, et le taux d'enchaînements 3,4 est de 8 %.

Ce polyisoprène lithié est stocké sous azote à une température de 10° C. Aucune évolution du titre n'est observée, pendant un stockage de plusieurs semaines sous pression d'azote à cette température.

### 1. 1. 2) Copolymérisation du butadiène et du styrène initiée par ce polyisoprène vivant:

On introduit dans le réacteur précité de 14 l du cyclohexane, du butadiène et du styrène, selon des débits massiques respectifs de 100 / 12,2 / 2,3. On ajoute également dans ce réacteur 80 parties par million (en poids) de tétraméthyléthylènediamine.

On injecte 200 µmol de n-BuLi en entrée de ligne afin de neutraliser les impuretés protiques qui sont apportées par les différents constituants présents dans l'entrée de ligne.

A l'entrée du réacteur, on injecte 610 µmol pour 100 g de monomères de la solution du polyisoprène vivant décrite au paragraphe 1.1.1).

On ajuste les différents débits de telle sorte que le temps de séjour moyen dans le réacteur soit de 40 min. La température est maintenue à 90° C.

Le taux de conversion, qui est mesuré sur un prélèvement réalisé en sortie de réacteur, est de 90 %, et la viscosité inhérente, laquelle est mesurée à 0,1 g/dl dans le toluène, est de 2,01 dl/g.

Dans un mélangeur dynamique muni d'un agitateur réglé à une vitesse de 2 500 tr/min et contenant le copolymère à blocs SBR-IR obtenu, on ajoute ensuite 300 µmol / 100 g de monomères d'un agent de fonctionnalisation constitué de dibutyldichloroétain.

Après 4 min. de cette réaction de couplage, on soumet le copolymère ainsi fonctionnalisé à un traitement anti-oxydant, à l'aide de 0,8 pce de 2,2'-méthylène-bis(4-méthyl-6-tertiobutylphénol) et de 0.2 pce de N-(1,3-diméthylbutyl)-N'-phényl-p-phénylènediamine.

On sépare le copolymère ainsi traité de sa solution par une opération de stripping à la vapeur d'eau, puis on le sèche sur un outil à cylindres à 100° C pendant 20 min, pour obtenir le copolymère fonctionnalisé D à blocs SBR-IR selon l'invention.

La viscosité inhérente de ce copolymère D est de 2,49 dl/g, et sa viscosité ML est de 88.

Le bloc SBR de ce copolymère D contient 16 % de styrène (en masse) et, pour sa partie butadiénique, 24% de motifs vinyliques.

### 1. 2) Préparation du copolymère E "témoin":

Cet SBR E fonctionnalisé est préparé par copolymérisation du styrène et du butadiène qui est initiée au moyen de n-BuLi, en mettant en oeuvre la méthode décrite au paragraphe précédent 1. 1. 2), à ceci près que les 610 µmol / 100 g de monomères de polyisoprène vivant sont remplacées par 630 µmol / 100 g de monomères de n-BuLi actif, pour l'initiation de cette copolymérisation.

Le taux de conversion à la sortie du réacteur est de 98 %, et la viscosité inhérente du SBR obtenu, avant ajout du dibutyldichloroétain, est de 1,82 dl/g.

Le SBR, après couplage au dibutyldichloroétain, est soumis au traitement anti-oxydant précité et auxdites opérations de stripping et de séchage.

La viscosité inhérente du copolymère E ainsi obtenu est de 2,34 dl/g, et sa viscosité ML est de 90.

La microstructure de ce copolymère E est identique à celle susmentionnée pour le bloc SBR dudit copolymère D.

### 2) Préparation d'un copolymère fonctionnalisé F à deux blocs SBR-IR selon l'invention et d'un copolymère SBR "témoin" fonctionnalisé G, ces copolymères présentant un ML de 70:

### 2. 1) Préparation du copolymère F à blocs selon l'invention:

Ce copolymère fonctionnalisé F est préparé en mettant en oeuvre la méthode décrite au paragraphe 1. 1. 2) pour ledit copolymère D, à ceci près que:
- la quantité ajoutée de polyisoprène vivant pour initier la copolymérisation est ici de 700 µmol / 100 g de monomères, à la place des 610 µmol dudit paragraphe 1. 1. 2), et que
- la quantité ajoutée de dibutyldichloroétain est de 350 µmol / 100 g de monomères.

Le taux de conversion à la sortie du réacteur est de 99 %, et la viscosité inhérente du copolymère à blocs SBR-IR obtenu, avant ajout du dibutyldichloroétain, est de 1,74 dl/g.

Après couplage au dibutyldichloroétain, le copolymère obtenu est soumis au traitement anti-oxydant précité et auxdites opérations de stripping et de séchage.

La viscosité inhérente du copolymère F ainsi obtenu est de 2,16 dl/g, et sa viscosité ML est de 70.

La microstructure de ce copolymère F est identique à celle susmentionnée pour le bloc SBR dudit copolymère D.

### 2. 2) Préparation du copolymère G "témoin" SBR:

Cet SBR G fonctionnalisé est préparé par copolymérisation du styrène et du butadiène initiée au moyen de n-BuLi, en mettant en oeuvre la méthode décrite au paragraphe 1. 1. 2), à ceci près que les 610 µmol / 100 g de monomères de polyisoprène vivant sont remplacées par 720 µmol / 100 g de monomères de n-BuLi actif, pour l'initiation de cette copolymérisation.

Le taux de conversion à la sortie du réacteur est de 97 %, et la viscosité inhérence du SBR obtenu, avant ajout du dibutyldichloroétain, est de 1,71 dl/g.

Le SBR, après couplage au dibutyldichloroétain, est soumis au traitement anti-oxydant précité et auxdites opérations de stripping et de séchage.

La viscosité inhérente du copolymère G ainsi obtenu est de 2,12 dl/g, et sa viscosité ML est de 70.

La microstructure de ce copolymère G est identique à celle susmentionnée pour le bloc SBR dudit copolymère D.

### 3) Compositions de caoutchouc selon l'invention pour bandes de roulement de pneumatique comprenant chacune un copolymère D ou F fonctionnalisé à deux blocs SBR-IR selon l'invention, en comparaison de compositions "témoin":

### 3. 1) Compositions avec une charge renforçante à base de noir de carbone:

### 3. 1. 1) Première série de compositions:

On a testé ici deux compositions de caoutchouc qui comprennent chacune 50 pce de noir de carbone N220:
- une composition D₁ selon l'invention à base dudit copolymère fonctionnalisé D selon l'invention, à blocs SBR-IR et de ML 90, et
- une composition « témoin » E₁ à base dudit copolymère SBR « témoin » E, également fonctionnalisé et de ML 90.

La formulation de chaque composition D₁, E₁ est la suivante (en pce):

| | |
|---|---|
| élastomère | 100 |
| N220 | 50 |
| ZnO | 3 |
| acide stéarique | 2,5 |
| antioxydant (1) | 1,5 |
| soufre | 1,5 |
| sulfénamide (2) | 0,8 |

où (1) est la N-1,3-diméthylbutyl-N'-phényl-p-phénylène diamine, et
(2) est la N-cyclohexyl-2-benzothiazylsulfénamide.

Chaque composition D₁, E₁ est préparée dans un mélangeur interne par un travail thermomécanique en une étape qui dure 5 min. pour une vitesse de palettes de 40 tr/min., jusqu'à atteindre une même température de tombée de 170° C, tandis que l'incorporation du système de vulcanisation est effectuée sur un outil à cylindres à 30° C.

La vulcanisation est effectuée à 150° C pendant 40 min.

Les résultats sont consignés dans le tableau 3 suivant:

**TABLEAU 3:**

| Composition | Composition D₁ | Composition E₁ |
|---|---|---|
| ML gomme | 88 | 90 |

| Propriétés à l'état non vulcanisé: | | |
|---|---|---|
| ML | 123 | 135 |

| Propriétés à l'état vulcanisé: | | |
|---|---|---|
| MA 10 % | 5,35 | 5,35 |
| MA 100 % | 1,80 | 1,75 |
| MA 300 % | 2,15 | 2,05 |
| Shore | 63 | 62 |
| Rupture Scott (MPa) | 23,01 | 21,41 |
| Allongement rupture (%) | 536 | 538 |
| Pertes 60° C (déformation 30 %) | 27,6 | 29,8 |

| Propriétés dynamiques en fonction de la déformation: | | |
|---|---|---|
| G* à 0,45 % | 3,7 | 3,8 |
| G* à 50 % | 1,85 | 1,9 |
| tan delta max. | 0,154 | 0,16 |

Concernant les propriétés à l'état vulcanisé de ces compositions chargées au noir de carbone, on en déduit que les propriétés hystérétiques (à faibles et fortes déformations) de la composition D₁ selon l'invention, à base dudit copolymère fonctionnalisé D à blocs SBR-IR, sont améliorées par rapport à celles de la composition « témoin » E₁ à base du SBR fonctionnalisé E.

On en déduit que la résistance au roulement d'un pneumatique dont la bande de roulement comprend ladite composition D₁ selon l'invention est améliorée par rapport à celle d'un pneumatique dont la bande de roulement comprend ladite composition « témoin » E₁.

De plus, on notera que cette composition D₁ selon l'invention présente une viscosité ML inférieure à celle de ladite composition E₁, ce qui représente une meilleure aptitude à la mise en oeuvre par rapport à cette composition classique E₁.

On peut en déduire que ledit copolymère D selon l'invention confère, à une composition de caoutchouc qui le contient et qui est chargée au noir de carbone, des propriétés d'hystérèse et de mise en oeuvre améliorées par rapport à une telle composition connue E₁.

### 3.1. 2) Seconde série de compositions:

On a testé ici trois compositions de caoutchouc qui comprennent chacune 50 pce de noir de carbone N375:
- une composition D₂ selon l'invention à base dudit copolymère fonctionnalisé D selon l'invention, à blocs SBR-IR et de ML 90,
- une composition « témoin » E₂ à base dudit copolymère SBR « témoin » E, également fonctionnalisé et de ML 90, et
- une composition « témoin » E'₂ à base d'un coupage dudit copolymère SBR « témoin » E et dudit polyisoprène « témoin » C de l'exemple 1.

La formulation de chaque composition D₂, E₂, E'₂ est la suivante (en pce):

| | |
|---|---|
| élastomère | 100 |
| N375 | 50 |
| ZnO | 2,5 |
| acide stéarique | 1,5 |
| antioxydant (1) | 1,5 |
| soufre | 1,2 |
| sulfénamide (2) | 1,2 |

où (1) est la N-1,3-diméthylbutyl-N'-phényl-p-phénylène diamine, et
(2) est la N-cyclohexyl-2-benzothiazylsulfénamide.

Chaque composition D₂, E₂, E'₂ est préparée dans un mélangeur interne par un travail thermomécanique en une étape qui dure 5 min. pour une vitesse de palettes de 40 tr/min., jusqu'à atteindre une même température maximale de tombée de 160° C, tandis que l'incorporation du système de vulcanisation est effectuée sur « homo-finisseur » à 30° C.

La vulcanisation est effectuée à 150° C pendant 30 min.

Les résultats sont consignés dans lé tableau 4 suivant:

**TABLEAU 4:**

| Composition | Composition D₂ | Composition E₂ | Composition E'₂ |
|---|---|---|---|
| ML gomme | 88 | 90 | |

| Propriétés à l'état non vulcanisé: | | | |
|---|---|---|---|
| ML | 77 | 87 | 74 |

| Propriétés à l'état vulcanisé: | | | |
|---|---|---|---|
| MA 10 % | 5,59 | 6,03 | 5,7 |
| MA 100 % | 2,1 | 2,26 | 2,15 |
| MA 300 % | 2,79 | 2,86 | 2,86 |
| MA300 %/MA100 % | 1,33 | 1,27 | 1,33 |
| Shore | 66,1 | 67,2 | 66,1 |
| Rupture Scott (MPa) | 20,9 | 20 | 21,2 |
| Allongement rupture (%) | 449 | 446 | 467 |
| Pertes 60° C (déformation 30 %) | 24,6 | 28,8 | 27,2 |

| Propriétés dynamiques en fonction de la déformation: | | | |
|---|---|---|---|
| G* à 0,45 % | 4,25 | 5,1 | 4,71 |
| G* à 50 % | 2,3 | 2,53 | 2,34 |
| delta G* | 1,95 | 2,57 | 2,37 |
| tan delta max. | 0,174 | 0,193 | 0,192 |

Concernant les propriétés à l'état vulcanisé de ces compositions chargées au noir de carbone, on en déduit que les propriétés hystérétiques (à faibles et fortes déformations) de la composition D₂ selon l'invention, à base dudit copolymère fonctionnalisé D à blocs SBR-IR, sont améliorées par rapport à celles de la composition « témoin » E₂ à base du SBR fonctionnalisé E et à celles de la composition « témoin » E'₂ à base du coupage précité.

On en déduit que la résistance au roulement d'un pneumatique dont la bande de roulement comprend ladite composition D₂ selon l'invention est améliorée par rapport à celle de pneumatiques dont les bandes de roulement comprennent respectivement lesdites compositions « témoin » E₂ et E'₂.

De plus, on notera que cette composition D₂ selon l'invention présente une viscosité ML qui est, d'une part, inférieure à celle de ladite composition E₂, ce qui représente une meilleure aptitude à la mise en oeuvre par rapport à cette composition classique E₂ et qui est, d'autre part, proche de celle de ladite composition E'2, ce qui représente une aptitude à la mise en oeuvre comparable à celle de cette dernière.

On peut en déduire que ledit copolymère D₂ selon l'invention confère, à une composition de caoutchouc qui le contient et qui est chargée au noir de carbone, des propriétés d'hystérèse et de mise en oeuvre globalement améliorées par rapport à de telles compositions connues E₂ et E'₂.

### 3. 2) Compositions avec une charge renforçante à base de silice:

On a testé ici deux compositions de caoutchouc qui comprennent chacune 50 pce de silice.
- une composition F selon l'invention à base dudit copolymère fonctionnalisé F selon l'invention, à blocs SBR-IR et de ML 70, et
- une composition « témoin » G à base dudit copolymère SBR « témoin » G, également fonctionnalisé et de ML 70.

La formulation de chaque composition F, G est la suivante (en pce):

| | |
|---|---|
| élastomère | 100 |
| silice (1) | 50 |
| agent liaison (2) | 10 |
| ZnO | 3 |
| acide stéarique | 2,5 |
| antioxydant (3) | 2,5 |
| soufre | 1,5 |
| sulfénamide (4) | 1,8 |

où (1) est une silice hautement dispersible sous forme de microperles, qui est commercialisée par la société Rhodia sous la dénomination « Zéosil 1165 MP »,
(2) est un organosilane polysulfuré commercialisé par la société Dégussa sous la dénomination « X50S »,
(3) est la N-1,3-diméthylbutyl-N'-phényl-p-phénylène diamine, et
(4) est la N-cyclohexyl-2-benzothiazylsulfénamide

Chaque composition F, G est préparée selon la méthode décrite dans le document de brevet européen EP-A-501 227, étant précisé que l'on opère dans un mélangeur interne un travail thermomécanique en deux étapes qui durent respectivement 5 min. et 4 min., pour une vitesse moyenne des palettes de 45 tr/min., jusqu'à atteindre une même température maximale de tombée de 160° C, tandis que l'incorporation du système de vulcanisation est effectuée sur un outil à cylindres à 30° C.

La vulcanisation est effectuée à 150° C pendant 40 min.

Les résultats sont consignés dans le tableau 5 suivant:

**TABLEAU 5:**

| Composition | Composition F | Composition G |
|---|---|---|
| ML gomme | 70 | 70 |

| Propriétés à l'état non vulcanisé: | | |
|---|---|---|
| ML | 100 | 102 |

| Propriétés à l'état vulcanisé: | | |
|---|---|---|
| MA 10 % | 8,2 | 8,4 |
| MA 100 % | 2,64 | 2,64 |
| MA 300% | 2,88 | 2,90 |
| Shore | 72,5 | 72,5 |
| Rupture Scott (MPa) | 20,2 | 21,0 |
| Allongement rupture (%) | 442 | 458 |
| Pertes 60° C (déformation 30 %) | 25,35 | 27,5 |

| Propriétés dynamiques en fonction de la déformation: | | |
|---|---|---|
| G* à 0,45 % | 6,79 | 7,03 |
| G* à 50 % | 2,54 | 2,57 |
| tan delta max. | 0,135 | 0,151 |

Concernant les propriétés à l'état vulcanisé de ces compositions chargées à la silice, on en déduit, d'une part, que les propriétés hystérétiques (à faibles et fortes déformations) de la composition F selon l'invention, à base dudit copolymère fonctionnalisé F à blocs SBR-IR, sont améliorées par rapport à celles de la composition « témoin » G à base dudit SBR G également fonctionnalisé et que, d'autre part, l'aptitude à la mise en oeuvre de cette composition F selon l'invention est sensiblement équivalente à celle de ladite composition G (ML voisins).

On en déduit que la résistance au roulement d'un pneumatique dont la bande de roulement comprend ladite composition F selon l'invention est améliorée par rapport à celle d'un pneumatique dont la bande de roulement comprend ladite composition « témoin » G.

## Revendications

1. Copolymère à n blocs (n = 2 ou 3) destiné à former une matrice élastomère d'une composition de caoutchouc réticulable au soufre d'hystérèse réduite, chacun desdits blocs comprenant un élastomère diénique dont le taux molaire d'unités issues de diènes conjugués est supérieur à 15 %, et l'un ou chacun desdits blocs formant extrémité de chaîne dudit copolymère étant constitué d'un polyisoprène, respectivement pour n = 2 ou n = 3,
**caractérisé en ce que**
- la masse moléculaire moyenne en nombre Mₙ₁ dudit ou de chaque bloc polyisoprène d'extrémité est comprise entre 2 500 et 20 000 g/mol, et **en ce que**
- la masse moléculaire moyenne en nombre Mₙ₂ du bloc dudit copolymère qui est autre que ledit ou chaque bloc polyisoprène d'extrémité est comprise entre 80 000 g/mol et 350 000 g/mol.

2. Copolymère à blocs selon la revendication 1, **caractérisé en ce que** le rapport desdites masses moléculaires Mₙ₁ / Mₙ₂ est compris entre 5 et 20 %.

3. Copolymère à blocs selon la revendication 1 ou 2, **caractérisé en ce qu'**il est constitué de deux blocs.

4. Copolymère à blocs selon la revendication 1 ou 2, **caractérisé en ce qu'**il est constitué de trois blocs.

5. Copolymère à blocs selon une des revendications précédentes, **caractérisé en ce que** ledit bloc qui est autre que ledit ou chaque bloc polyisoprène d'extrémité comprend une fonction interactive avec une charge renforçante.

6. Copolymère à blocs selon la revendication 5, **caractérisé en ce que** ladite fonction est interactive avec de la silice.

7. Copolymère à blocs selon la revendication 6, **caractérisé en ce que** ladite fonction interactive avec de la silice comprend un groupe silanol.

8. Copolymère à blocs selon la revendication 6, **caractérisé en ce que** ladite fonction interactive avec de la silice comprend un groupe mono, di ou tri-alkoxysilane.

9. Copolymère à blocs selon la revendication 5, **caractérisé en ce que** ladite fonction est interactive avec du noir de carbone.

10. Copolymère à blocs selon la revendication 9, **caractérisé en ce que** ladite fonction interactive avec du noir de carbone comprend une liaison C-Sn.

11. Copolymère à blocs selon la revendication 10, **caractérisé en ce que** ladite fonction interactive avec du noir de carbone est obtenue par réaction avec un agent de type mono, di, tri ou tétra-halogénoétain.

12. Copolymère à blocs selon la revendication 9, **caractérisé en ce que** ladite fonction interactive avec du noir de carbone comprend un groupe amine.

13. Copolymère à blocs selon une des revendications 1 à 12, **caractérisé en ce que** ledit bloc qui est autre que ledit ou chaque bloc polyisoprène d'extrémité est un polybutadiène.

14. Copolymère à blocs selon une des revendications 1 à 12, **caractérisé en ce que** ledit bloc qui est autre que ledit ou chaque bloc polyisoprène d'extrémité est un copolymère du styrène et du butadiène.

15. Copolymère à blocs selon une des revendications 1 à 12, **caractérisé en ce que** ledit bloc qui est autre que ledit ou chaque bloc polyisoprène d'extrémité est un copolymère du styrène et de l'isoprène.

16. Copolymère à blocs selon une des revendications précédentes, **caractérisé en ce que** ledit ou chaque bloc polyisoprène d'extrémité présente un taux d'enchaînements vinyliques 3,4 et 1,2 qui est compris entre 1 et 20 %.

17. Copolymère à blocs selon la revendication 13, **caractérisé en ce que** le taux d'enchaînements 1,2 dans le bloc polybutadiène est compris entre 10 % et 60 %.

18. Copolymère à blocs selon la revendication 14, **caractérisé en ce que** les taux respectifs d'enchaînements 1,2 et d'enchaînements styréniques dans ledit bloc copolymère de styrène et de butadiène sont compris entre 10 % et 70 %, et entre 5 % et 50 %.

19. Composition de caoutchouc réticulable ou réticulée comprenant une matrice élastomère, ladite composition étant adaptée pour présenter une hystérèse réduite à l'état réticulé, **caractérisée en ce que** ladite matrice élastomère comprend un copolymère à blocs selon une des revendications précédentes.

20. Composition de caoutchouc selon la revendication 19, **caractérisée en ce qu'**elle comprend une charge renforçante, ledit bloc qui est autre que ledit ou chaque bloc polyisoprène d'extrémité étant fonctionnalisé, couplé ou étoilé pour la liaison avec ladite charge renforçante.

21. Composition de caoutchouc selon la revendication 20, **caractérisée en ce que** la charge renforçante comprend, à titre majoritaire, une charge inorganique renforçante, telle que de la silice.

22. Composition de caoutchouc selon la revendication 20, **caractérisée en ce que** ladite charge renforçante comprend, à titre majoritaire, du noir de carbone.

23. Bande de roulement de pneumatique utilisable pour réduire la résistance au roulement d'un pneumatique l'incorporant, **caractérisée en ce qu'**elle comprend une composition de caoutchouc réticulée selon une des revendications 19 à 22.

24. Pneumatique, **caractérisé en ce qu'**il comporte une bande de roulement selon la revendication 23.

## Patentansprüche

1. Copolymer mit n Blöcken (n = 2 oder 3), das dazu dient, eine Elastomermatrix für eine mit Schwefel vernetzbare Kautschukmischung mit verminderter Hysterese zu bilden, wobei jeder Block ein Dienelastomer enthält, dessen molarer Gehalt an Einheiten, die von konjugierten Dienen abgeleitet sind, über 15 % liegt und für n = 2 bzw. n = 3 ein Block oder jeder Block; die das Ende der Kette des Copolymers bilden, aus einem Polyisopren besteht,
**dadurch gekennzeichnet, dass**
- die zahlenmittlere Molmasse Mₙ₁ des endständigen Polyisoprenblocks oder jedes endständigen Polyisoprenblocks im Bereich von 2 500 bis 20 000 g/mol liegt, und **dadurch**, dass
- die zahlenmittlere Molmasse Mₙ₂ des Blocks des Copolymers, der von dem endständigen Polyisoprenblock oder den endständigen Polyisoprenblöcken verschieden ist, im Bereich von 80 000 bis 350 000 g/mol liegt.

2. Blockcopolymer nach Anspruch 1, **dadurch gekennzeichnet, dass** das Verhältnis der Molmassen Mₙ₁/Mₙ₂ im Bereich von 5 bis 20 % liegt.

3. Blockcopolymer nach Anspruch 1 oder 2, **dadurch gekennzeichnet, dass** es aus zwei Blöcken besteht.

4. Blockcopolymer nach Anspruch 1 oder 2, **dadurch gekennzeichnet, dass** es aus drei Blöcken besteht.

5. Blockcopolymer nach einem der vorhergehenden Ansprüche, **dadurch gekennzeichnet, dass** der Block, welcher von dem endständigen Polyisoprenblock oder den endständigen Polyisoprenblöcken verschieden ist, eine Funktion aufweist, die mit einem verstärkenden Füllstoff wechselwirkt.

6. Blockcopolymer nach Anspruch 5, **dadurch gekennzeichnet, dass** die Funktion mit Kieselsäure wechselwirkt.

7. Blockcopolymer nach Anspruch 6, **dadurch gekennzeichnet, dass** die Funktion, die mit Kieselsäure wechselwirkt, eine Silanolgruppe aufweist.

8. Blockcopolymer nach Anspruch 6, **dadurch gekennzeichnet, dass** die Funktion, die mit Kieselsäure wechselwirkt, eine Mono-, Di- oder Trialkoxysilangruppe aufweist.

9. Blockcopolymer nach Anspruch 5, **dadurch gekennzeichnet, dass** die Funktion mit Ruß wechselwirkt.

10. Blockcopolymer nach Anspruch 9, **dadurch gekennzeichnet, dass** die Funktion, die mit Ruß wechselwirkt, eine C-Sn-Bindung aufweist.

11. Blockcopolymer nach Anspruch 10, **dadurch gekennzeichnet, dass** die Funktion, die mit Ruß wechselwirkt, durch Umsetzung mit einem Stoff vom Typ Mono-, Di-, Tri- oder Tetrahalogenzinn gebildet wird.

12. Blockcopolymer nach Anspruch 9, **dadurch gekennzeichnet, dass** die Funktion, die mit Ruß wechselwirkt, eine Aminogruppe aufweist.

13. Blockcopolymer nach einem der Ansprüche 1 bis 12, **dadurch gekennzeichnet, dass** der Block, der von dem endständigen Polyisoprenblock oder den endständigen Polyisoprenblöcken verschieden ist, ein Polybutadien ist.

14. Blockcopolymer nach einem der Ansprüche 1 bis 12, **dadurch gekennzeichnet, dass** der Block, der von dem endständigen Polyisoprenblock oder den endständigen Polyisoprenblöcken verschieden ist, ein Copolymer von Styrol und Butadien ist.

15. Blockcopolymer nach einem der Ansprüche 1 bis 12, **dadurch gekennzeichnet, dass** der Block, der von dem endständigen Polyisoprenblock oder den endständigen Polyisoprenblöcken verschieden ist, ein Copolymer von Styrol und Isopren ist.

16. Blockcopolymer nach einem der vorhergehenden Ansprüche, **dadurch gekennzeichnet, dass** der endständige Polyisoprenblock oder die endständigen Polyisoprenblöcke einen Gehalt an 3,4- und 1,2-Vinylverknüpfungen aufweist, der im Bereich von 1 bis 20 % liegt.

17. Blockcopolymer nach Anspruch 13, **dadurch gekennzeichnet, dass** der Gehalt an 1,2-Verknüpfungen im Butadienblock im Bereich von 10 bis 60 % liegt.

18. Blockcopolymer nach Anspruch 14, **dadurch gekennzeichnet, dass** der Gehalt an 1,2-Verknüpfungen bzw. Styrolverknüpfungen in dem Styrol/Butadien-Copolymerblock im Bereich von 10 bis 70 % bzw. im Bereich von 5 bis 50 % liegt.

19. Vernetzbare oder vernetzte Kautschukmischung, die eine Elastomermatrix enthält, wobei die Zusammensetzung geeignet ist, im vernetzten Zustand eine verminderte Hysterese aufzuweisen, **dadurch gekennzeichnet, dass** die Elastomermatrix ein Blockcopolymer nach einem der vorhergehenden Ansprüche enthält.

20. Kautschukmischung nach Anspruch 19, **dadurch gekennzeichnet, dass** sie einen verstärkenden Füllstoff enthält, wobei der Block, der von dem endständigen Polyisoprenblock oder den endständigen Polyisoprenblöcken verschieden ist, für die Bindung mit dem verstärkenden Füllstoff funktionalisiert, gekuppelt oder sternförmig verzweigt wurde.

21. Kautschukmischung nach Anspruch 20, **dadurch gekennzeichnet, dass** der verstärkende Füllstoff in einem überwiegenden Anteil einen anorganischen verstärkenden Füllstoff, wie Kieselsäure, umfasst.

22. Kautschukmischung nach Anspruch 20, **dadurch gekennzeichnet, dass** der verstärkende Füllstoff in einem überwiegenden Anteil Ruß umfasst.

23. Laufstreifen eines Luftreifens, der für die Verminderung des Rollwiderstandes eines Luftreifens, der ihn enthält, verwendbar ist, **dadurch gekennzeichnet, dass** er eine vernetzte Kautschukmischung nach einem der Ansprüche 19 bis 22 enthält.

24. Luftreifen, **dadurch gekennzeichnet, dass** er einen Laufstreifen nach Anspruch 23 enthält.

## Claims

1. Copolymer with n blocks (n = 2 or 3) intended to constitute an elastomeric matrix of a sulphur cross-linkable rubber composition with reduced hysteresis, each of said blocks comprising a diene elastomer having a molar content of units originating from conjugated dienes of greater than 15%, and one or each of said blocks which forms the chain end of said copolymer consisting of a polyisoprene, when n = 2 or n = 3 respectively,
**characterised in that**
- the number-average molecular weight Mₙ₁ of said or each polyisoprene end block is between 2,500 and 20,000 g/mol, and **in that**
- the number-average molecular weight Mₙ₂ of the block of said copolymer which is other than said or each polyisoprene end block is between 80,000 g/mol and 350,000 g/mol.

2. Block copolymer according to Claim 1, **characterised in that** the ratio of said molecular weights Mₙ₁ / Mₙ₂ is between 5 and 20%.

3. Block copolymer according to Claim 1 or 2, **characterised in that** it consists of two blocks.

4. Block copolymer according to Claim 1 or 2, **characterised in that** it consists of three blocks.

5. Block copolymer according to one of the preceding claims, **characterised in that** said block which is other than said or each polyisoprene end block comprises a function capable of interacting with a reinforcing filler.

6. Block copolymer according to Claim 5, **characterised in that** said function is capable of interacting with silica.

7. Block copolymer according to Claim 6, **characterised in that** said function capable of interacting with silica comprises a silanol group.

8. Block copolymer according to Claim 6, **characterised in that** said function capable of interacting with silica comprises a mono-, di- or trialkoxysilane group.

9. Block copolymer according to Claim 5, **characterised in that** said function is capable of interacting with carbon black.

10. Block copolymer according to Claim 9, **characterised in that** said function capable of interacting with carbon black comprises a C-Sn bond.

11. Block copolymer according to Claim 10, **characterised in that** said function capable of interacting with carbon black is obtained by reaction with an agent of the mono- di-, tri- or tetrahalotin type.

12. Block copolymer according to Claim 9, **characterised in that** said function capable of interacting with carbon black comprises an amine group.

13. Block copolymer according to one of claims 1 to 12, **characterised in that** said block which is other than said or each polyisoprene end block is a polybutadiene.

14. Block copolymer according to one of claims 1 to 12, **characterised in that** said block which is other than said or each polyisoprene end block is a copolymer of styrene and butadiene.

15. Block copolymer according to one of claims 1 to 12, **characterised in that** said block which is other than said or each polyisoprene end block is a copolymer of styrene and isoprene.

16. Block copolymer according to one of the preceding claims, **characterised in that** said or each polyisoprene end block has a content of 3,4- and 1,2-vinyl linkages which is between 1 and 20%.

17. Block copolymer according to Claim 13, **characterised in that** the 1,2-linkage content in the polybutadiene block is between 10% and 60%.

18. Block copolymer according to Claim 14, **characterised in that** the contents of 1,2-linkages and styrene linkages in said styrene and butadiene copolymer block are between 10% and 70% and between 5% and 50% respectively.

19. Cross-linkable or cross-linked rubber composition comprising an elastomeric matrix, said composition being suitable to exhibit reduced hysteresis in the cross-linked state, **characterised in that** said elastomeric matrix comprises a block copolymer according to one of the preceding claims.

20. Rubber composition according to Claim 19, **characterised in that** it comprises a reinforcing filler, said block which is other than said or each polyisoprene end block being functionalised, coupled or starred for bonding with said reinforcing filler.

21. Rubber composition according to Claim 20, **characterised in that** the reinforcing filler comprises a majority proportion of a inorganic reinforcing filler, such as silica.

22. Rubber composition according to Claim 20, **characterised in that** said reinforcing filler comprises a majority proportion of carbon black.

23. Tyre tread usable for reducing the rolling resistance of a tyre containing it, **characterised in that** it comprises a cross-linked rubber composition according to one of claims 19 to 22.

24. Tyre, **characterised in that** it comprises a tread according to claim 23.
